# FASCICULE DE BREVET EUROPEEN

(11) **EP 0 753 437 B1**
(45) Date de publication et mention de la délivrance du brevet: **30.09.1998**
(21) Numéro de dépôt: 95401665.5
(22) Date de dépôt: 11.07.1995
(51) Int. Cl.: B60R 25/00, B60R 25/04

(54) **Système antivol de véhicule**
Diebstahlsicherungssystem für Kraftfahrzeuge
Anti theft system

(43) Date de publication de la demande: 15.01.1997
(73) Titulaire: SOCIETE D'APPLICATIONS GENERALES D'ELECTRICITE ET DE MECANIQUE SAGEM Société anonyme française, F-75783 Paris Cédex 16 (FR)
(72) Inventeur: Delaporte, Francis, 95520 Osny (FR); Branle, Jean-Pierre, 27140 Gisors (FR)
(74) Mandataire: Bloch, Gérard

(56) Documents cités:
- EP-A- 0 356 720
- DE-U- 9 314 256
- DE-U- 9 314 433
- DE-U- 9 320 270
- GB-A- 2 282 687
- MICROWAVE, vol.37, no.1, Janvier 1994, NORWOOD, MA, US pages 24 - 30, XP430225 HOWE ET AL. 'WIRELESS TECHNOLOGY FOR AUTOMOBILE THEFT PREVENTION'

## Description

Les besoins en protection contre le vol des véhicules ne font que croître actuellement et, à la clé mécanique associée à un canon de sécurité bloquant la colonne de direction, s'ajoute souvent maintenant une clé électronique pour augmenter l'efficacité de la protection.

Dans le cas d'une voiture à injection électronique, il est connu de verrouiller électroniquement le calculateur d'injection, c'est-à-dire un calculateur de commande du déplacement du véhicule tant qu'il n'a pas reçu un ordre de déverrouillage provenant d'un autre calculateur situé dans l'habitacle, c'est-à-dire un calculateur de contrôle du calculateur de commande.

Un clavier permet à un utilisateur autorisé de fournir au calculateur d'habitacle une clé électronique, ou mot de code secret, que celui-ci a déjà en mémoire, et, après comparaison des deux mots de code, le calculateur d'habitacle déverrouille le calculateur d'injection.

Pour livrer la clé électronique, on peut aussi utiliser une télécommande infrarouge ou une clé mécanique, d'antivol ou de contact, portant une mémoire contenant des données d'identification de la clé et associée à une antenne radio. Dans ce dernier cas, le canon de réception de la clé porte une interface radio de communication pour accéder aux données de la clé et les transmettre, par une liaison de données, à un circuit de lecture du calculateur d'habitacle, qui compare ces données à celles prévues et commande le déverrouillage du calculateur d'injection.

Un tel système présente des inconvénients.

En effet, la liaison entre le calculateur d'habitacle et l'interface présente une longueur importante et nécessite de prendre des précautions pour éviter qu'elle ne joue un rôle perturbateur d'antenne, émettrice ou réceptrice. Le blindage de la liaison n'est pas économiquement envisageable. En outre, en plus d'un fil de données, il faut prévoir un fil d'horloge, pour synchroniser l'interface radio du canon, et deux fils d'alimentation pour l'alimenter sous la tension régulée prévue.

Pour éviter ces inconvénients, DE-U-93 20 270 enseigne une clé comportant une diode émettrice infrarouge coopérant avec un récepteur logé dans la serrure commandant la colonne de direction. Un décodeur relié en sortie du récepteur peut être intégré dans un noeud, de raccordement à un bus, logé dans le boîtier de serrure. Le bus est relié à un dispositif de commande, tel qu'allumage électronique.

Le décodeur de lecture des données de la clé peut ainsi être à proximité de l'interface radio, ce qui élimine l'effet d'antenne lors de la transmission filaire de la clé électronique par l'interface.

DE-U-93 14 256 enseigne un simple dispositif de commande mécanique et électro-magnétique d'une serrure, sans calculateur d'habitacle.

Cependant, comme la liaison entre le calculateur d'habitacle et l'interface avec circuit de lecture est longue et perturbée, ceux-ci ne peuvent utiliser l'alimentation du calculateur d'habitacle, si bien qu'il faut prévoir, en sortie de celui-ci, une alimentation régulée spécifique pour téléalimenter l'interface, sans pourvoir cependant garantir l'absence de bruit électrique.

La présente invention vise à simplifier la liaison entre le calculateur d'habitacle et l'interface radio.

A cet effet, l'invention concerne un système antivol de véhicule selon la revendication 1.

Ainsi, les moyens de lecture se substituent aux moyens de contrôle pour commander leur source d'alimentation activée, ce qui simplifie la liaison entre ceux-ci et l'interface radio.

En outre, les moyens de lecture peuvent servir d'adaptateur de données entre l'interface et les moyens de contrôle afin, par exemple, d'adapter le mode de codage des données et ainsi faciliter leur transmission aux moyens de contrôle en limitant l'effet d'antenne.

Dans une forme de réalisation particulière, les moyens de lecture comprennent un microprocesseur d'adaptation du débit d'échanges entre l'interface de communication et les moyens de contrôle, le dispositif de sécurité comporte les moyens de contrôle, et l'interface de communication comporte une antenne constituée d'un circuit imprimé a plusieurs couches monté sur le dispositif de sécurité.

L'invention sera mieux comprise à l'aide de la description suivante de la forme de réalisation préférée du système antivol de l'invention, en référence au dessin annexé, sur lequel :
- la figure 1 est un schéma par blocs du système de l'invention,
- la figure 2 est un schéma électrique d'une alimentation du système,
- la figure 3 illustre, en fonction du temps t, des échanges de données de commande, et
- la figure 4 représente en coupe le système de l'invention, avec une plaque de blindage.

Le système antivol est associé ici à un canon 6 d'un dispositif de sécurité bloquant la colonne de direction d'une voiture, destiné à recevoir une clé mécanique 1.

La clé 1 comporte un ensemble électronique 2, représenté plus en détails à côté, contenant une mémoire 3, une logique d'échange 4 et une antenne en boucle 5.

Le système antivol comporte une antenne 11, formée ici de plusieurs spires constituées de pistes d'un circuit imprimé multicouche 10, gravées sur plusieurs des couches du circuit imprimé 10 et reliées en série par des trous métallisés. Une fenêtre du circuit imprimé 10 permet son montage autour du canon 6, les spires de l'antenne 11 entourant alors le canon 6.

Un circuit 12 d'interface d'émission-réception sans fil, ici radio, relie l'antenne 11 a une interface de lecture 13-16, comportant ici un microprocesseur 13 piloté par une base de temps, ici un quartz 15. Un circuit 16 d'interface de ligne relie, par une liaison de données 17, le microprocesseur 13 à un calculateur d'habitacle 18 contrôlant un calculateur d'injection 19. Une mémoire 8 du calculateur 18 contient des données d'identification de la clé 1 liées à celles de la clé 1, et ici identiques à ces données.

Une source d'alimentation 20 alimente les circuits 12-16 à partir de la batterie de la voiture, l'alimentation des calculateur 18-19 n'étant pas représentée.

Les circuits 12-16 et 20 sont en fait portés par le circuit imprimé 10, c'est-à-dire qu'ils sont associés au dispositif de sécurité 6.

L'alimentation 20 comporte deux entrées d'activation 21 et 22 respectivement reliées à la liaison 17 et à un circuit temporisateur 14 du microprocesseur 13. Les entrées 21, 22 aboutissent respectivement sur les anodes de deux diodes 28 et 29 reliées ensemble par leur cathode à une résistance 27 alimentant la base d'un transistor NPN, 26. L'émetteur du transistor 26 est relié à la masse et son collecteur est polarisé à la tension batterie Vb à travers une résistance 24 montée en parallèle sur la jonction émetteur-base d'un transistor PNP, 23. Le transistor 23, monté en série, alimente, par son collecteur, un circuit régulateur d'alimentation 25 alimentant en +5 volts le microprocesseur 13. L'alimentation, en +12 volts, du circuit 16 est effectuée de la même façon et, pour la clarté, n'est pas représentée.

Le fonctionnement du système antivol va maintenant être expliqué.

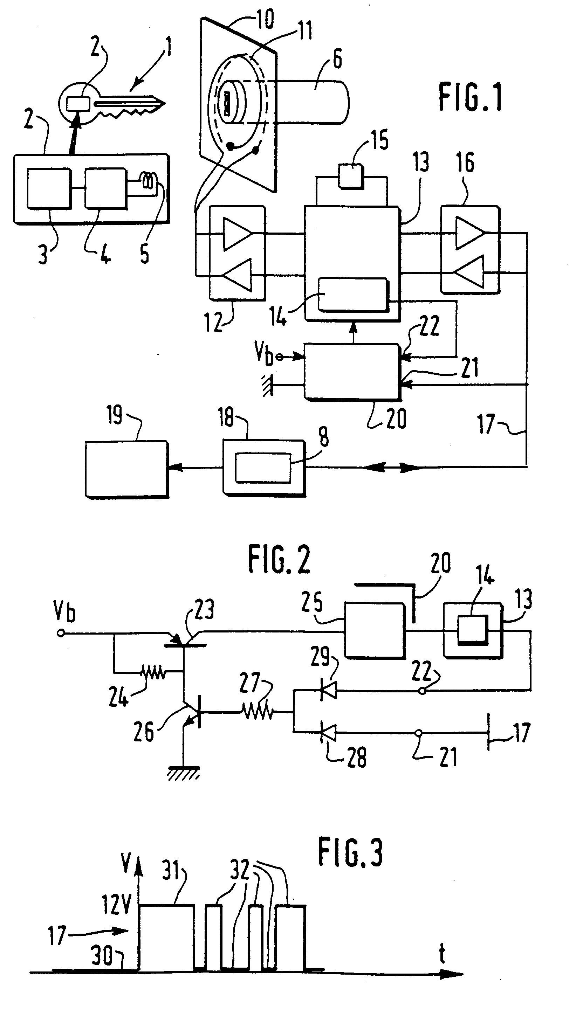

Le calculateur 18 envoie cycliquement au circuit de lecture 13, par la liaison 17, un message de commande de lecture des données de la clé 1, représenté sur la figure 3. A l'état repos, la liaison 17 présente un niveau électrique bas 30, de valeur quasiment nulle et la source d'alimentation 20 est inactive.

En début de message, la liaison 17 passe à un niveau haut, voisin ici de +12 volts, et la diode 28 conduit et alimente le transistor 26 qui devient conducteur. Le transistor série 23 est alors parcouru par un courant de base et, devenant conducteur, alimente le circuit régulateur 25. Le microprocesseur 13 est alors alimenté et le circuit temporisateur 14 est armé et fournit une tension de quelques volts sur l'entrée 29 de la source 20. En bref, la source d'alimentation 20 comporte deux entrées 28, 29 formant une fonction OU à diodes, dont l'une, 28, permet sont activation par le calculateur de contrôle 18 et dont l'autre, 29, est alimentée en rebouclage, ce qui assure une mémorisation de l'activation de la source 20 par le microprocesseur de lecture 13 et sous son contrôle. Le circuit temporisateur 14 fonctionne en chien de garde, c'est-à-dire qu'il est réarmé tant que le microprocesseur 13 présente une activité de lecture des données de la clé 1, et qu'il se désarmera, et désactivera la source 20, après une certaine durée d'inactivité du microprocesseur 13, la liaison 17 étant revenue au niveau 0 volt.

Comme le montre la figure 3, qui représente, comme indiqué, l'évolution de la tension V sur la liaison 17 lors de l'émission du message par le calculateur 18, à travers un circuit d'interface 5 volts/12 volts non représenté, après l'état repos 30 au niveau 0 volt, le message émis comporte un premier créneau 31 de tension haute +12 volts, appelé START, de durée suffisante pour activer la source 20 et faire passer le microprocesseur 13 dans un état lui permettant de recevoir la suite 32 des données du message.

Le microprocesseur 13 commande alors l'émetteur radio 12 pour, si la clé 1 est présente, envoyer, par modulation d'amplitude d'une fréquence porteuse, un message d'interrogation à la logique 4 de la clé 1, à travers l'antenne 5 alors couplée à l'antenne 11. En réponse, la logique 4 lit les données d'identification dans la mémoire 3 et commande une modulation correspondante de l'impédance, par rapport à l'air, de l'antenne 5, fonctionnant en transpondeur. L'alimentation en tension continue de l'ensemble 2 est ici assurée par récupération de l'énergie rayonnée par l'antenne 11.

L'émetteur 12 ayant poursuivi son émission de la fréquence porteuse, mais non modulée, le récepteur associé 12 détecte la modulation d'amplitude de cette porteuse, due à la variation de l'impédance de l'antenne 5, et retransmet les bits de données correspondants au microprocesseur 13.

A la fin de la lecture de la clé 1, le microprocesseur 13 envoie au calculateur 18, sur la liaison 17, un message contenant ces données. Le calculateur 18 compare alors les données de la clé 1 à celles de la mémoire 8 et, en cas de correspondance, envoie au calculateur d'injection 19 une commande de déverrouillage, autorisant un fonctionnement correct d'un dispositif d'injection, jusque là verrouillé.

Dans cet exemple, les échanges de données sur la liaison 17 s'effectuent à un débit voisin de 1 kb/s et la porteuse radio est modulée à environ 100 kb/s. Le microprocesseur 13 effectue donc une adaptation du débit des échanges entre le calculateur 18 de contrôle et l'interface radio 12. La faiblesse du débit de la liaison 17 évite ainsi un effet d'antenne. En outre, les niveaux logiques sur la liaison 17 étant 0 et +12 volts, ils sont peu susceptibles d'être perturbés.

Afin d'intégrer entièrement le système, il aurait pu être prévu de monter aussi le calculateur de contrôle 18 sur le circuit imprimé 10, et, par exemple, de réaliser le système sous la forme d'un circuit ASIC fournissant la commande de déverrouillage.

Par ailleurs, il peut être prévu que le dispositif de sécurité 6 comporte le microprocesseur de lecture 13 et les circuits associés et même le calculateur de contrôle 18.

On comprendra que le système antivol de l'invention doit pouvoir lire les données portées par une clé et que cette lecture s'effectue par une liaison sans fil, à courte portée pour conserver le secret des données lues. La fonction mécanique de la clé n'a par contre aucune importance et il peut s'agir, par exemple, d'une clé de portière.

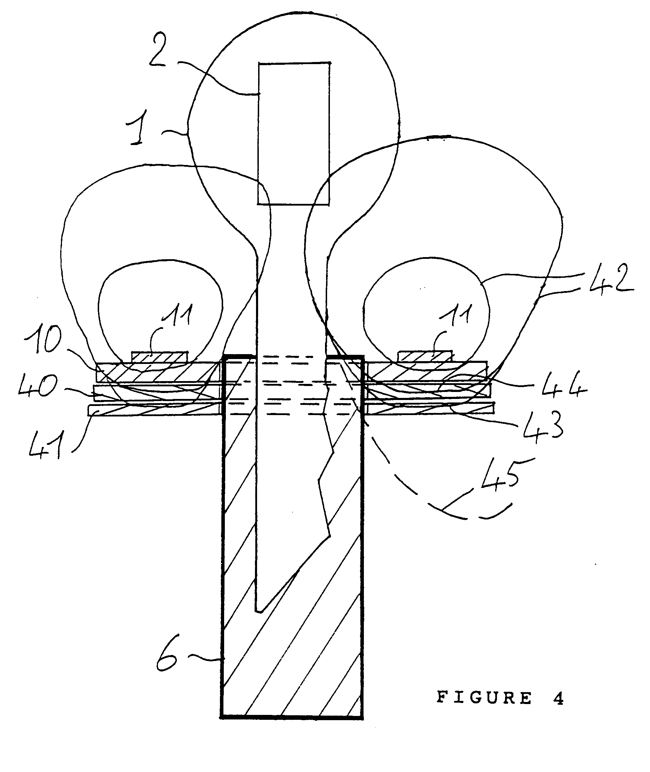

Afin de s'affranchir des perturbations apportées au champ magnétique créé par l'antenne 11 par la masse métallique du canon 6, une plaque 41 de matériau amagnétique (fig. 4), ici l'aluminium, est disposée en regard de la face arrière du circuit imprimé 10, opposée à l'ensemble électronique 2. Il est ici aussi prévu une plaque de ferrite 40, interposée entre le circuit 10 et la plaque amagnétique 41. La propagation des lignes de champ 42 de l'antenne 11 vers le volume, à l'arrière du circuit 10, contenant le canon 6, est ainsi bloquée (43) par la plaque amagnétique 41.

De plus, les lignes de force sont canalisées (44) par la plaque de ferrite 40.

A titre comparatif, la ligne 45 en pointillés représente une ligne de champ de l'antenne 11 qui existerait sans plaque amagnétique 41 et risquerait de fausser l'accord de l'antenne 11.

## Revendications

1. Système antivol de véhicule, comprenant un dispositif de sécurité (6) monté sur le véhicule, et une clé mécanique (1) pour le dispositif, la clé (1) comportant des moyens de mémorisation de données (3) reliés à des moyens (4, 5) de liaison sans fil avec une interface de communication (11, 12) associée au dispositif de sécurité (6) et reliée, par des moyens de lecture de données (13-16) associés au dispositif de sécurité (6), à des moyens de contrôle (18) de moyens de commande (19) du déplacement du véhicule et commandés par les données (3) de la clé (1), dispositif caractérisé par le fait qu'il est prévu une source d'alimentation (20) des moyens de lecture (13-16) agencée pour être activée par les moyens de contrôle (18) et maintenue à l'état activé par les moyens de lecture (13-16).

2. Système antivol selon la revendication 1, dans lequel il est prévu des moyens de maintien temporisés (14) de l'état activé de la source (20).

3. Système antivol selon l'une des revendications 1 et 2, dans lequel les moyens de lecture (13-16) comportent une base de temps (15).

4. Système antivol selon l'une des revendications 1 à 3, dans lequel les moyens de lecture comprennent un microprocesseur (13) d'adaptation du débit des échanges entre l'interface de communication (12) et les moyens de contrôle (18).

5. Système selon l'une des revendications 1 à 4, dans lequel les moyens de lecture comprennent un microprocesseur (13) d'adaptation du niveau des échanges entre l'interface de communication (12) et les moyens de contrôle (18).

6. Système antivol selon l'une des revendications 1 à 5, dans lequel les moyens de contrôle (18) comprennent des moyens (8) de mémorisation de données liées à celles (3) de la clé (1).

7. Système antivol selon l'une des revendications 1 à 6, dans lequel le dispositif de sécurité (6) comporte les moyens de lecture (13-16).

8. Système antivol selon la revendication 7, dans lequel le dispositif de sécurité (6) comporte des moyens de contrôle (18).

9. Système antivol selon l'une des revendications 1 à 8, dans lequel l'interface de communication comporte une antenne constituée d'un circuit imprimé (10) à plusieurs couches monté sur le dispositif de sécurité (6).

10. Système antivol selon l'une des revendications 1 à 8, dans lequel l'interface de communication comporte une antenne (11) associée à une plaque de blindage (41) en matériau amagnétique.

11. Système antivol selon la revendication 10, dans lequel une plaque de ferrite (40) est disposée entre l'antenne (11) et le blindage (41).

## Claims

1. Anti-theft system for a vehicle, comprising a security device (6) mounted on the vehicle, and a mechanical key (1) for the device, the key (1) comprising means for memorising data (3), which are connected to means (4,5) for wireless connection to a communication interface (11, 12), which is associated with the security device (6) and connected, by data-reading means (13-16) associated with the security device (6), to means (18) for monitoring means (19) for controlling the movement of the vehicle and controlled by the data (3) of the key (1), which device is characterised by the fact that a supply source (20) for the reading means (13-16) is provided, which is arranged to be activated by the monitoring means (18) and kept in the activated state by the reading means (13-16).

2. Anti-theft system according to Claim 1, in which delayed means (14) for maintaining the activated state of the source (20) are provided.

3. Anti-theft system according to one of Claims 1 and 2, in which the reading means (13-16) comprise a time base (15).

4. Anti-theft system according to one of Claims 1 to 3, in which the reading means comprise a microprocessor (13) for the adaptation of the rate of flow of exchanges between the communication interface (12) and the monitoring means (18).

5. System according to one of Claims 1 to 4, in which the reading means comprise a microprocessor (13) for the adaptation of the level of exchanges between the communication interface (12) and the monitoring means (18).

6. Anti-theft system according to one of Claims 1 to 5, in which the monitoring means (18) comprise means (8) for the memorisation of data connected to those (3) of the key (1).

7. Anti-theft system according to one of Claims 1 to 6, in which the security device (6) comprises the reading means (13-16)

8. Anti-theft system according to Claim 7, in which the security device (6) comprises monitoring means (18).

9. Anti-theft system according to one of Claims 1 to 8, in which the communication interface comprises an antenna constituted by a printed circuit (10) with several layers mounted on the security device (6).

10. Anti-theft system according to one of Claims 1 to 8, in which the communication interface comprises an antenna (11) associated with a screening plate (41) of a non-magnetic material.

11. Anti-theft system according to Claim 10, in which a ferrite plate (40) is disposed between the antenna (11) and the screening (41).

## Patentansprüche

1. Diebstahlsicherungssystem für Fahrzeuge, mit einer Sicherungseinrichtung (6), die an dem Fahrzeug angebracht ist, und einem mechanischen Schlüssel (1) für die Einrichtung, wobei der Schlüssel (1) eine Speichereinrichtung für Daten (3) aufweist, die mit Mitteln (4, 5) zur drahtlosen Verbindung mit einem Kommunikationsinterface (11, 12) verbunden ist, welches der Sicherungseinrichtung (6) zugeordnet ist und über eine Leseeinrichtung für Daten (13-16), die der Sicherungseinrichtung (6) zugeordnet ist, mit einer Kontrolleinrichtung (18) für Einrichtungen (19) zur Bedienung der Fortbewegung des Fahrzeugs verbunden ist, und durch die Daten (3) des Schlüssels (1) gesteuert ist, wobei die Vorrichtung dadurch gekennzeichnet ist, daß eine Stromversorgungsquelle (20) der Leseeinrichtung (13-16) vorgesehen ist, die so eingerichtet ist, daß sie durch die Kontrolleinrichtung (18) aktiviert wird und durch die Leseeinrichtung (13-16) im aktiven Zustand gehalten wird.

2. Diebstahlsicherungssystem nach Anspruch 1, dadurch gekennzeichnet, daß eine zeitverzögerte Einrichtung (14) zum Halten des aktivierten Zustands der Quelle (20) vorhanden ist.

3. Diebstahlsicherungssystem nach einem der Ansprüche 1 oder 2, dadurch gekennzeichnet, daß die Leseeinrichtung (13-16) eine Zeitbasis (15) enthält.

4. Diebstahlsicherungssystem nach einem der Ansprüche 1 bis 3, dadurch gekennzeichnet, daß die Leseeinrichtung einen Mikroprozessor (13) zur Anpassung der Leistung der Austauschvorgänge zwischen dem Kommunikationsinterface (12) und der Kontrolleinrichtung (18) aufweist.

5. Diebstahlsicherungssystem nach einem der Ansprüche 1 bis 4, dadurch gekennzeichnet, daß die Leseeinrichtung einen Mikroprozessor (13) zur Anpassung des Niveaus der Austauschvorgänge zwischen dem Kommunikationsinterface (12) und der Kontrolleinrichtung (18) aufweist.

6. Diebstahlsicherungssystem nach einem der Ansprüche 1 bis 5, dadurch gekennzeichnet, daß die Kontrolleinrichtung (18) eine Speichereinrichtung (8) für die Daten aufweist, die mit denen (3) des Schlüssels (1) verbunden sind.

7. Diebstahlsicherungssystem nach einem der Ansprüche 1 bis 6, dadurch gekennzeichnet, daß die Sicherungseinrichtung (6) die Leseeinrichtung (13-16) umfaßt.

8. Diebstahlsicherungssystem nach Anspruch 7, dadurch gekennzeichnet, daß die Sicherungseinrichtung (6) eine Kontrolleinrichtung (18) umfaßt.

9. Diebstahlsicherungssystem nach einem der Ansprüche 1 bis 8, dadurch gekennzeichnet, daß das Kommunikationsinterface eine Antenne aufweist, die aus einer gedruckten Schaltung (10) mit mehreren Schichten gebildet ist, welche auf der Sicherungseinrichtung (6) angebracht ist.

10. Diebstahlsicherungssystem nach einem der Ansprüche 1 bis 8, dadurch gekennzeichnet, daß das Kommunikationsinterface eine Antenne (11) aufweist, die einer Abschirmplatte (41) aus nicht-magnetischem Material zugeordnet ist.

11. Diebstahlsicherungssystem nach Anspruch 10, dadurch gekennzeichnet, daß eine Ferritplatte (40) zwischen der Antenne (11) und der Abschirmung (41) angeordnet ist.
